(19) **Europäisches Patentamt European Patent Office Office européen des brevets**

(11) **EP 4 760 351 A1**

(12) **EUROPEAN PATENT APPLICATION**
published in accordance with Art. 153(4) EPC

(43) Date of publication:
**17.06.2026 Bulletin 2026/25**

(21) Application number: **24851330.1**

(22) Date of filing: **26.04.2024**

(51) International Patent Classification (IPC):
**G01S 13/60** (2006.01)

(52) Cooperative Patent Classification (CPC):
**G01S 13/60**

(86) International application number:
**PCT/JP2024/016434**

(87) International publication number:
**WO 2025/032896 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 JP 2023129108**

(71) Applicant: **Hitachi, Ltd.
Tokyo 100-8280 (JP)**

(72) Inventors:
• **HAYASHI, Masaki
Tokyo 100-8280 (JP)**
• **AKAMINE, Yukinori
Tokyo 100-8280 (JP)**
• **HATTORI, Taishi
Tokyo 100-8280 (JP)**

(74) Representative: **MERH-IP Matias Erny Reichl Hoffmann
Patentanwälte PartG mbB
Paul-Heyse-Straße 29
80336 München (DE)**

(54) **VELOCITY DETECTION DEVICE AND VELOCITY DETECTION METHOD**

(57) The present invention enables continuous detection of accurate train speed even in a trackless section without a track surface.

For the detection, a speed detection device of the present invention includes:

a millimeter wave speed sensor having a transmission function of emitting an irradiation wave of the electromagnetic wave and a reception function of receiving a reflected wave of the irradiation wave;

a distance calculator that calculates a distance from the millimeter wave speed sensor to a reflective object based on a delay time of the reflected wave from the irradiation wave; and

a speed calculator that calculates speed based on a difference between a beat frequency calculated from a difference between the irradiation wave and the reflected wave, and a beat frequency calculated before the calculated beat frequency,

in which the speed calculator determines a sampling condition based on the distance from the millimeter wave speed sensor to the reflective object calculated by the distance calculator, and calculates speed by using only a component of the reflected wave satisfying the sampling condition.

FIG. 4

**Description**

Technical Field

The present invention relates to a speed detection device and a speed detection method.

Background Art

As a method for efficiently operating trains, introduction of a train group control system has been studied in which an operation target such as a target time to arrive at a next station is given to each train and each train travels according to the given target. This system is called an automatic train operation (ATO) system.

There is also a system as a method of safely operating a train, in which a speed limit for traveling to a travelable point is set in accordance with a position on a railway where the train is present, and the train can be operated at this speed limit or less. Examples of this system include an automatic train stop (ATS) system, an automatic train control (ATC) system, and a communications based train control (CBTC) system, which are different in a control method, and these systems are also collectively referred to as an automatic train protect (ATP) system.

The ATO system and the ATP system described above require accurate grasp of an operation record and a speed limit for an operation target to perform operation safely and accurately on time, and acquiring an accurate position on a railway is especially important.

Current railways each allow speed to be typically detected using a speed generator or a speed sensor to calculate travel distances based on the detected speed. The speed generator includes a gear that rotates together with an axle and a coil disposed close to the gear, and outputs a sine wave by changing a magnetic field generated in the coil by rotation of the gear, thereby detecting the speed. The speed sensor includes a magnetic sensor disposed instead of the coil in the speed generator, and outputs a rectangular wave and detects the speed using the rectangular wave.

The speed sensor can detect the speed even in a low speed range where the speed generator is difficult to detect speed due to a small change in the magnetic field. Unfortunately, the speed generator and the speed sensor are each a speed detection method depending on rotation and adhesion of the wheel, and thus may be affected by an error due to wear of the wheel, an error due to resolution of a wheel diameter used to calculate the speed, or an error due to idling or sliding, for example.

Alternatively, PTL 1 discloses the following technique of detecting speed of a railway vehicle based on the amount of Doppler shift using the Doppler effect generated by a millimeter wave speed sensor.

"A train control system 100 includes a speed detection device 1 that detects speed of a train based on a reflected wave of an electromagnetic wave with which a track is irradiated, and a train control device (ATC device 2) that controls traveling speed of the train based on the speed detected by the speed detection device 1. Here, the speed detection device 1 especially includes a housing 11 installed under a floor of a vehicle of the train and one or more speed sensors (transceivers 12) having an electromagnetic wave transmission/reception function, and at least one speed sensor is fixed to the housing 11 to allow its irradiation axis 10 to hit an end of a rail 7 when the vehicle travels in a straight section".

Additionally, PTL 2 discloses the following technique as an information processing device capable of reducing capacity of a transmission path necessary for transmission of sensor data.

"The information processing device extracts a part of sensor data and generates extracted data based on a spectrum of a specific component of the sensor data of a distance measuring sensor. The present technique can be applied to a vehicle control system that performs processing related to vehicle driving support and automatic driving".

Citation List

Patent Literature

PTL 1: JP 2021-18205 A
PTL 2: WO 2022/075075 A

Summary of Invention

Technical Problem

Using the technique of PTL 1 enables detecting traveling speed of a train using a millimeter wave speed sensor. Consequently, a position on a railway with respect to a specific point can be recognized by acquiring a moving distance of the train. Unfortunately, the technique of PTL 1 causes rails and a track surface to be irradiated with an electromagnetic wave that is emitted from the millimeter wave speed sensor, and that has a center located on an inner end part or an outer end part of the rails constituting the track. Thus, accurate speed is less likely to be detected when the rails are installed on a member raised from a roadbed such as a specific section of a vehicle yard. As a result, an error may occur in the position on a railway.

Then, the technique of PTL 2 causes a region of interest to be set in a distance/velocity spectrum of a reflected wave received by a millimeter wave speed sensor and components included within a threshold in this region to be extracted. Consequently, capacity of a millimeter wave speed sensor signal that tends to have a large capacity can be compressed to result in reducing the capacity of the transmission path necessary for transmission of the sensor data. Unfortunately, PTL 2 extracts the distance/speed spectrum focusing on a specific region, and thus is less likely to directly improve speed detection accuracy.

Thus, it is an object of the present invention to provide a speed detection technique capable of detecting accurate speed regardless of a situation of a road surface in a speed detection technique using a millimeter wave speed sensor.

Solution to Problem

To solve the above problems, one of representative speed detection devices of the present invention includes a millimeter wave speed sensor having a transmission function of emitting an electromagnetic wave and a reception function of receiving a reflected wave of an irradiation wave, a distance calculator that calculates a distance from the millimeter wave speed sensor to a reflective object based on a delay time of the reflected wave from the irradiation wave, and a speed calculator that calculates speed based on a phase difference between a beat signal calculated from a difference between the irradiation wave and the reflected wave, and a beat signal calculated before the calculated beat signal.

Then, the speed calculator determines a sampling condition based on the distance from the millimeter wave speed sensor to the reflective object calculated by the distance calculator, and calculates speed by using only a component of the reflected wave satisfying the determined sampling condition.

Advantageous Effects of Invention

The present invention enables providing a speed detection technique capable of detecting accurate speed regardless of a situation of a road surface in a speed detection technique using a millimeter wave speed sensor.

Problems, configurations, and effects other than those described above will be clarified by the following description in embodiments for carrying out the invention.

Brief Description of Drawings

[FIG. 1] FIG. 1 is a diagram for illustrating an example of mounting a speed detection device on a train.
[FIG. 2] FIG. 2 is a diagram for illustrating a positional relationship between a millimeter wave speed sensor and a road surface.
[FIG. 3] FIG. 3 is a diagram for illustrating a positional relationship between a millimeter wave speed sensor and a road surface.
[FIG. 4] FIG. 4 is a diagram for illustrating a relationship between an irradiation wave from a millimeter wave speed sensor and a reflected wave.
[FIG. 5] FIG. 5 is a diagram for illustrating a relationship between an irradiation wave from a millimeter wave speed sensor and a reflected wave.
[FIG. 6] FIG. 6 is a diagram for illustrating an irradiation wave range used for speed detection.
[FIG. 7] FIG. 7 is a diagram for illustrating an example of sampling conditions.
[FIG. 8] FIG. 8 is a diagram for illustrating a speed conversion method.
[FIG. 9] FIG. 9 is a diagram for illustrating speed conversion processing.
[FIG. 10] FIG. 10 is a diagram for illustrating a second embodiment.
[FIG. 11] FIG. 11 is a diagram for illustrating a third embodiment.

Description of Embodiments

Hereinafter, embodiments of the present invention will be described with reference to the drawings. The present invention is not limited by the embodiments for carrying out the present invention. The drawings illustrate the same parts with the same reference numerals.

When there is a plurality of components having the same or similar functions, the same reference numerals may be attached with different subscripts for illustration. When the plurality of components is not required to be distinguished, the components may be illustrated without a subscript.

Although terms, "first", "second", "third", and the like may be used in the present disclosure to illustrate various elements or components, it will be understood that these elements or components should not be limited by these terms. These terms are only used to distinguish one element or component from another. Thus, a first element or component discussed below may also be referred to as a second element or component without departing from teaching of a concept of the present invention.

Each drawing shows a position, a size, a shape, a range, and the like of each component that may not represent an actual position, size, shape, range, and the like to facilitate understanding of the invention. Thus, the present invention is not necessarily limited to the position, size, shape, range, and the like disclosed in each drawing.

<Millimeter wave speed sensor>

The millimeter wave speed sensor in the present disclosure uses a frequency modulated continuous wave (FMCW) method in which an electromagnetic wave to be emitted is modulated. A continuous wave (CW) method of a conventional millimeter wave speed sensor does not allow distance information to be obtained for a reflected wave, and allows only speed measurement. For this reason, when a plurality of reflected waves is observed, for example, it is difficult to determine whether each reflected wave is composed of a primary reflection component or a secondary reflection component from a measurement object, or reflection from another object. As a result, speed measurement using the CW method causes a speed measurement error due to multiple reflections.

In contrast, the FMCW method causes signal processing after reception of a reflected wave to be complicated, so that a sensor of the FMCW method is often used by being attached to a radar that does not move by itself or to an object with slow movement, and thus is not used as a speed sensor by being attached to a moving object. However, microcomputers reduced in size and improved in performance in recent years enable high-speed signal processing, so that possibility of application to speed sensors has been studied.

<Overview of present disclosure>

The millimeter wave speed sensor in the present disclosure uses the FMCW method, and is configured to measure a distance of an object in an irradiation range of an electromagnetic wave, and identify a reflected wave from a rail from among objects based on information on the distance. Extracting only the reflected wave from the rail allows a component of a reflected wave from other than the rail, which is an error factor of speed measurement, to be excluded, whereby speed detection with respect to the rail is accurately achieved.

The positional relationship between the millimeter wave speed sensor mounted on the vehicle and the rail is always a distance relationship in a certain range although some variation exists due to shaking or the like during traveling. Thus, speed can be accurately measured by targeting only the reflected wave from the rail as follows: setting a sampling condition for a distance BIN calculated by an $FFT_R$ in the FMCW method; extracting a distance BIN satisfying the sampling condition and a distance BIN before and after the distance BIN; and calculating the speed using a subsequent $FFT_V$.

Additionally, the signal processing of speed calculation is not performed on every reflected wave and only extracted information is set as a processing target, so that the processing can be performed at high speed without using expensive calculation hardware.

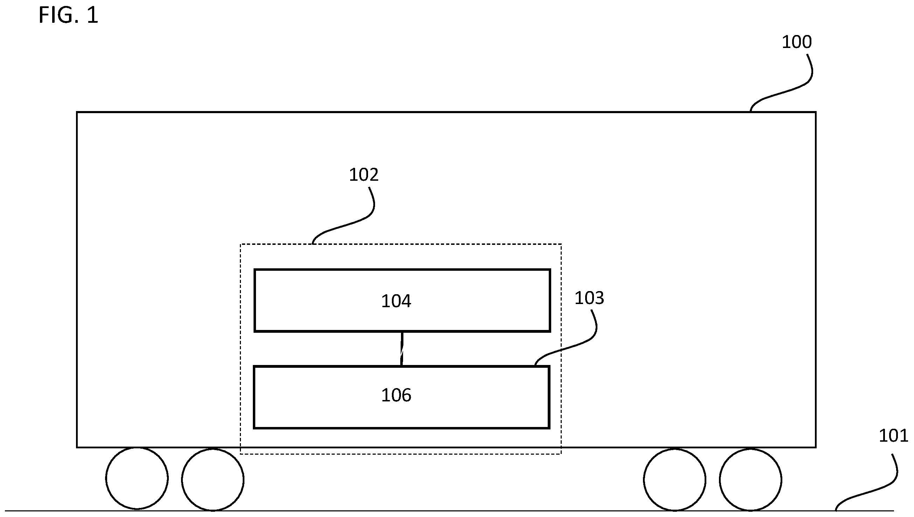

First, an example of mounting the speed detection device on a train will be described with reference to FIG. 1.

FIG. 1 illustrates a train 100 that is a vehicle assumed to be operated on a railway track under various track surface conditions of a station or the outside of the station. Although a train typically includes a plurality of vehicles connected to each other, FIG. 1 illustrates only a configuration with a vehicle (head vehicle) constituting the train to simplify the description.

Although FIG. 1 also illustrates an example in which a train position recognition system that measures speed of a vehicle is mounted on the head vehicle, the speed measurement device may be mounted on another vehicle in the train position recognition system according to the present invention.

As illustrated in FIG. 1, a train position recognition system 102 is mounted on the train 100 traveling on rails 101, and the train position recognition system includes a speed detection device 103 and an on-board control device 104.

As illustrated in FIG. 1, the train position recognition system includes the speed detection device 103 and the on-board control device 104, and a millimeter wave speed sensor 106 is mounted as the speed detection device 103.

The on-board control device obtains a position at an appropriate point using a transponder (not illustrated) installed on the ground, and calculates a travel distance from the appropriate point using a distance calculated from speed information obtained from the speed detection device.

(On normal route)

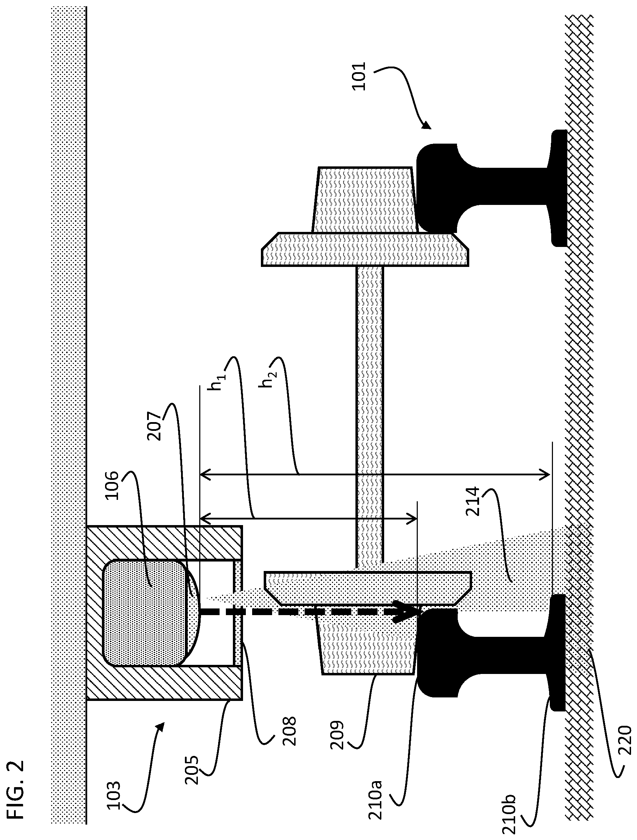

Next, a positional relationship between the millimeter wave speed sensor and a roadbed when the train 100 is located on a normal route will be described with reference to FIG. 2. FIG. 2 is a diagram for illustrating a positional relationship among the millimeter wave speed sensor 106, the rails 101, and a roadbed when the rails 101 are each installed at a position substantially at the same height as a roadbed 220. The millimeter wave speed sensor 106 is fixed in a housing 205 and includes a lens 207 that controls an irradiation range of an electromagnetic wave and a transmission window 208 for emitting the electromagnetic wave of the millimeter wave speed sensor to outside the speed measurement device while being installed in a lower part of a vehicle so that corresponding one of the rails 101 is included in an irradiation range 214 of the electromagnetic wave emitted from the millimeter wave speed sensor 106.

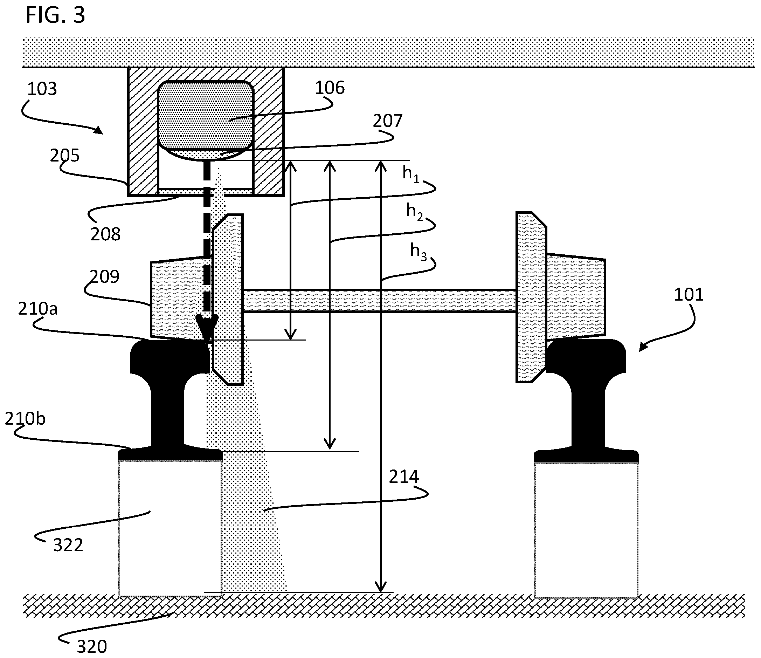

Although FIGS. 2 and 3 each illustrate a wheel 209 to facilitate understanding of a relationship between an irradiation range of the electromagnetic wave emitted from the millimeter wave speed sensor 106 and the rails, it does not mean that the wheel is disposed in the irradiation range of the electromagnetic wave. It is desirable that the millimeter wave speed sensor 106 is installed at a position shifted in a front-rear direction in a traveling direction from a position immediately above the wheel 209 instead of being installed immediately above the wheel 209, and the electromagnetic wave emitted from the millimeter wave speed sensor is emitted to a rail top part from an oblique direction.

FIG. 2 illustrates distances of the electromagnetic wave emitted from the millimeter wave speed sensor, the distances including a distance of the electromagnetic wave emitted to a rail top part 210a, being indicated as h1, and a distance of the electromagnetic wave irradiated to a rail bottom part 210b, being indicated as h2.

Although FIG. 2 illustrates the millimeter wave speed sensor that is disposed above an inner end part of the rail top part when the vehicle and the ground are horizontal, the center of the millimeter wave speed sensor and the position of the rail top part are not limited thereto, and the center of the millimeter wave speed sensor may be located above the center of the rail top part or an outer end part of the rail top part. Although FIG. 2 illustrates the millimeter wave speed sensor that also emits the electromagnetic wave to one of the rails, the number and positions of mounted millimeter wave speed sensors are not limited thereto, and the millimeter wave speed sensors may be installed above both the left and right rails, for example.

(On rails at raised height)

Next, a positional relationship between the millimeter wave speed sensor and each of the rail 101 and a roadbed 320 when a train is located on a rail installed on a member 322 raising the rail from the roadbed 320, such as a pit line of a railyard, will be described with reference to FIG. 3.

FIG. 3 is different from FIG. 2 in that the rail 101 is placed on the member 322 raised from the roadbed 320 instead of being installed on the roadbed 220 in FIG. 2. Thus, the same reference numerals are given to the same or equivalent components as those described in FIG. 2 described above in the following description to simplify or eliminate the description.

FIG. 3 illustrates the rail installed on the member 322 raising the rail from the roadbed 320, in which distances from the millimeter wave speed sensor 106 to irradiation targets include a distance h1 to the rail top part 210a, a distance h2 to the rail bottom part 210b, and a distance h3 to the roadbed 320. The roadbed 320 serves as a ground, through which a person in charge or the like passes, in a railyard or the like.

When speed of the train is detected using the millimeter wave speed sensor of the FMCW method in a situation as illustrated in FIG. 3, the millimeter wave speed sensor of the FMCW method also receives a reflected wave from the roadbed 320 away from the rail, and thus measurement accuracy of the speed may deteriorate. When the signal processing is performed on all of various reflected waves, a calculation load may be excessive.

The state as illustrated in FIG. 3 in which the measurement accuracy of the speed may deteriorate occurs not only in the railyard, but also during traveling on a bridge.

<Overview of configuration and processing of millimeter wave speed sensor>

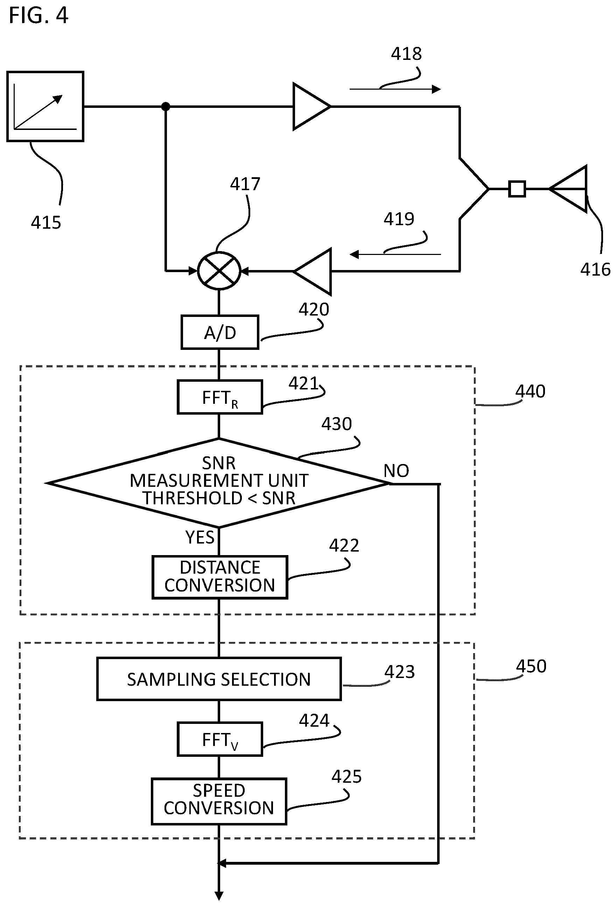

Next, a configuration and processing of the millimeter wave speed sensor used in a first embodiment of the present invention will be described with reference to FIG. 4.

FIG. 4 is a diagram illustrating processing of the millimeter wave speed sensor of the FMCW method according to the first embodiment of the present invention. The millimeter wave speed sensor outputs a variable frequency from a synthesizer 415 and emits an irradiation wave 418, which is an electromagnetic wave to be emitted, from an antenna 416. The antenna also receives a reflected wave 419 that is an electromagnetic wave that is the irradiation wave reflected by an object. Although FIG. 4 illustrates the irradiation wave and the reflected wave that are transmitted and received by one antenna, an antenna for transmitting the irradiation wave and an antenna for receiving the reflected wave may be separately provided.

The millimeter wave speed sensor includes a mixer 417 that combines two frequencies to generate a signal of a new frequency. The mixer acquires the irradiation wave output from the synthesizer and the reflected wave received from the antenna, and performs $FFT_R$ 421 processing in the A/D 420 that converts an analog signal and a digital signal as well as in a distance calculator 440 to perform distance conversion 422.

Here, the $FFT_R$ 421 means a range FFT that obtains distance information by performing fast Fourier transform on the signal of the new frequency generated by the mixer 417.

After that, a speed calculator 450 performs sampling selection 423 such as acquiring only a signal of a specific distance component from the distance conversion or acquiring only a signal of a specific distance component (specific distance BIN) after extracting power intensity. Details of the sampling selection will be described later.

The speed calculator 450 further performs $FFT_V$ 424 processing on the extracted specific distance BIN to perform speed conversion 425. Here, the $FFT_V$ 424 means Doppler FFT that obtains speed information by performing fast Fourier transform on range FFT output of a plurality of repeated chirps.

Although the FFT processing is performed in steps of performing the distance conversion and the speed conversion in FIG. 4, the FFT is divided into the $FFT_R$ and the $FFT_V$ due to difference in processing contents.

Alternatively, an SNR measurement unit 430 may be provided after the $FFT_R$ 421, the SNR measurement unit 430 being configured to measure and determine whether a component of a reflected wave can be recognized as a signal, and the processing of the distance conversion 422 may be performed only when the signal exceeds a set threshold.

<Millimeter wave speed sensor of FMCW method>

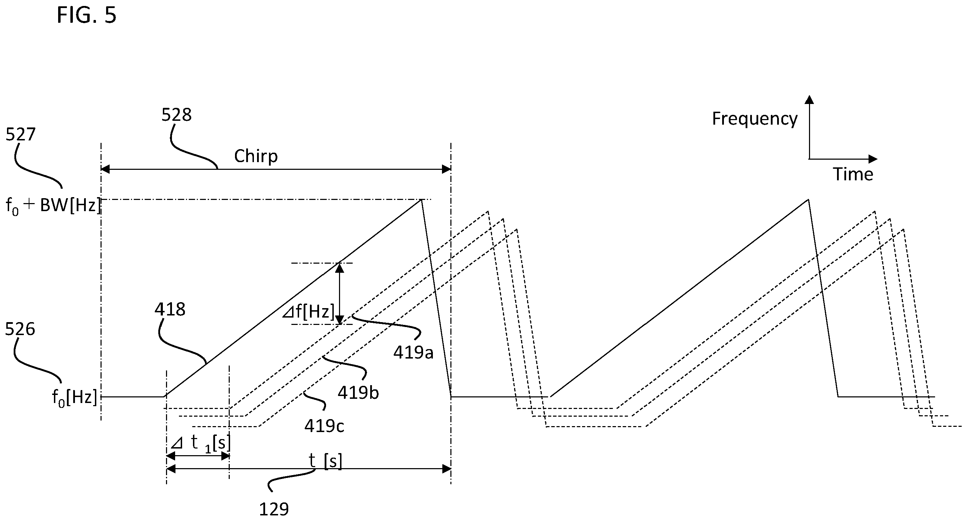

Next, a relationship between an irradiation wave and a reflected wave in the millimeter wave speed sensor of the FMCW method as a premise of the present disclosure will be described with reference to FIG. 5.

FIG. 5 is a diagram with a vertical axis representing a frequency and a horizontal axis representing time, the diagram illustrating a relationship between an irradiation wave and a reflected wave from a general millimeter wave speed sensor. The millimeter wave speed sensor includes a synthesizer that generates a frequency change from $f_0$ [Hz] 526 to "$f_0$ + BW" [Hz] 527 for each chirp 528, in which a time during which the frequency changes within one chirp is t [s] 529.

The irradiation wave is reflected when hitting an object, so that a temporal delay occurs between the irradiation wave and the reflected wave, and the reflected wave attenuates due to influence of a material of the object or humidity in a space. For this reason, $\Delta f$ [Hz] that is a frequency difference is generated between the irradiation wave 418 and the reflected wave at an arbitrary time point. As for the reflected wave, a reflected wave a: 419a having a shortest distance to be reflected from the millimeter wave speed sensor, a reflected wave b: 419b having a distance longer than the shortest distance, and a reflected wave c: 419c having a longest distance to be reflected are obtained due to a difference in irradiation distance, and the reflected waves have respective differences in frequency from the irradiation wave.

(Irradiation wave range)

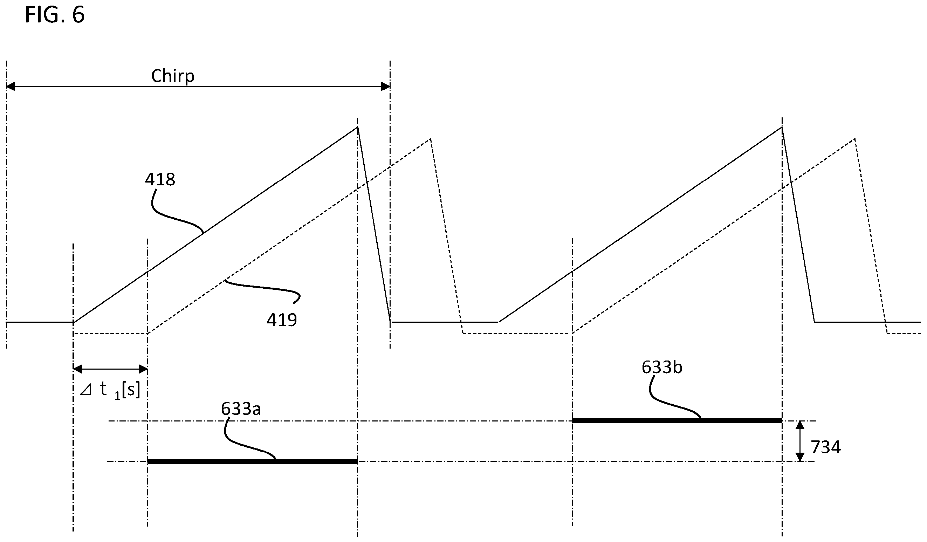

FIG. 6 is a diagram for illustrating an irradiation wave range used for speed detection in the first embodiment. The millimeter wave speed sensor can calculate a distance to an object for each reflected wave (distance conversion) from a delay time $\Delta t_1$ [s] of the reflected wave as shown in Expression (1). In Expression (1), R represents a distance, c represents the speed of light.

$$R = (\Delta t_1\ [s]\ {}^*C)\ /\ 2\ ...\ Expression\ (1)$$

(Speed conversion)

FIG. 6 is a diagram illustrating a mechanism of performing speed conversion from two chirp frequencies of an irradiation wave and one reflected wave.

The millimeter wave speed sensor obtains a beat frequency 633 from a frequency difference $\Delta f$ [Hz] between the irradiation wave and the reflected wave at time t [s] at which a frequency in one chirp changes. FIG. 6 shows a beat frequency a: 633a that is obtained in a first chirp, and a beat frequency b: 633b that is obtained in a next chirp, and beat frequencies are compared between two or more chirps. The beat frequencies are each a difference between the irradiation wave and the reflected wave. Thus, change in the beat frequency means change in a distance between the millimeter wave speed sensor and the object.

Next, a beat frequency and speed conversion will be described. The beat frequency is a difference between the irradiation wave and the reflected wave. The reflected wave has a certain amount of attenuation due to environmental conditions, and the beat frequency changes in accordance with a distance to an object with respect to the beat frequency when the irradiation wave has a frequency of $f_0$ [Hz]. This change indicates a delay of the reflected wave, that is, a change in phase. When a train is not traveling, the beat frequency does not change in phase. Thus, the millimeter wave speed sensor always determines a speed of 0 [km/h] when the phase is uniform. When the train is traveling, the speed is determined based on a magnitude of the change in phase because the phase changes.

Specifically, an irradiation wave ($x_1$) and a reflected wave ($x_2$), and a new frequency ($x_{out}$) generated from the irradiation wave and the reflected wave in the mixer of the millimeter wave speed sensor can be expressed by Expressions (2) to (4) below. In Expressions, $\omega$ represents an angular frequency and $\Phi$ represents a phase.

$$x_1 = \sin (\omega_1 t + \Phi_1) \ ... \ \text{Expression (2)}$$

$$x_2 = \sin (\omega_2 t + \Phi_2) \ ... \ \text{Expression (3)}$$

$$x_{out} = \sin ((\omega_1 - \omega_2) t + (\Phi_1 - \Phi_2)) \ ... \ \text{Expression (4)}$$

That is, Expressions (2) to (4) show that when the irradiation wave and the reflected wave are equal in phase to each other and have a phase difference of 0, a chirp of the new frequency ($x_{out}$) becomes equal to the irradiation wave.

Next, the beat frequency has an initial phase $\Phi_0$ that is an instantaneous time $\Delta t_1$ at a frequency $f_x$ [Hz] corresponding to a start point of the new frequency, as shown in Expression (5). The initial phase $\Phi_0$ can also be expressed by Expression (6) using a distance R and a wavelength $\lambda$ of the irradiation wave.

$$\Phi_0 = 2*\pi*f_x* \Delta t_1 \ ... \ \text{Expression (5)}$$

$$\Phi_0 = (4*\pi*R) / \lambda \ ... \ \text{Expression (6)}$$

Then, the beat frequency for an object at the distance R is a sine wave expressed by Expression (7).

$$\text{Beat frequency} = A\sin (2*\pi*f_0* \Delta t_1 + \Phi_0) \ ... \ \text{Expression (7)}$$

Next, the beat frequency has a phase difference $\Delta\Phi$ that can be expressed by Expression (8) using Expression (6), so that the speed can be acquired by Expression (9). However, Expression (9) holds under a condition of "$|\Delta\Phi| < \pi$", and under a condition of "$|\Delta\Phi| \ll \pi$", the speed can be expressed by Expression (10).

$$\Delta\Phi_0 = (4*\pi*V* \Delta t_1) / \lambda \ ... \ \text{Expression (8)}$$

$$V = (\lambda* \Delta\Phi) / (4*\pi* \Delta t_1) \ ... \ \text{Expression (9)}$$

$$V = \lambda / (4* \Delta t_1) \ ... \ \text{Expression (10)}$$

<First embodiment>

Hereinafter, a first embodiment of the present disclosure will be described in which accurate speed detection is performed based on the distance relationship between the millimeter wave speed sensor installed in the vehicle and the rail or the roadbed, and the relationship between the rail or the roadbed and the millimeter wave speed sensor of the FMCW method, the relationship being described above.

(Sampling condition)

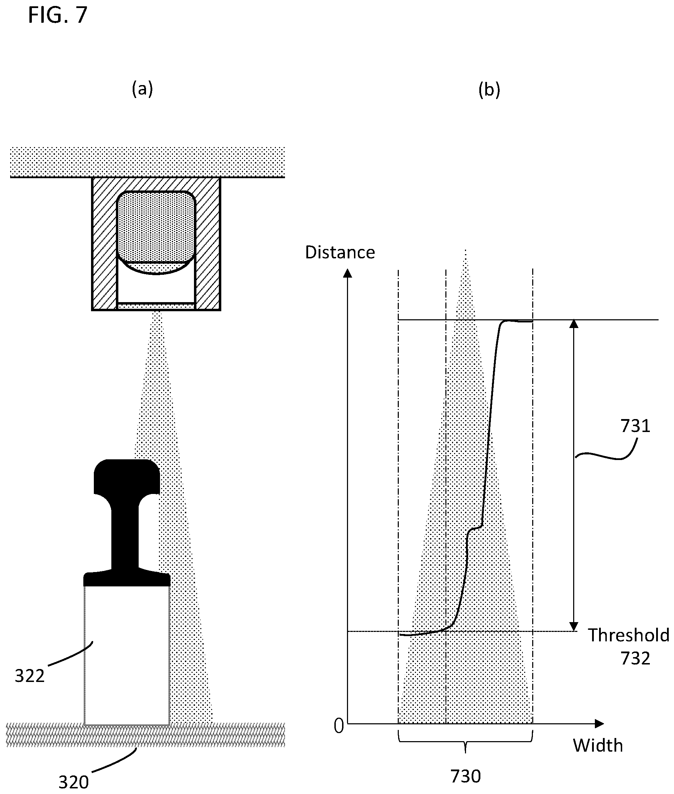

First, an example of a sampling condition of a reflected wave, the sampling condition being necessary for accurate speed detection, will be described with reference to FIG. 7.

The reflected wave of the millimeter wave speed sensor increases in delay time from the irradiation wave in accordance with a distance from the millimeter wave speed sensor to an object. Thus, the irradiation wave reflected by the rail top part, the rail bottom part, or the roadbed is different in delay time as illustrated in FIG. 7. FIG. 7 illustrates the rail that is installed on the member 322 raising the rail from the roadbed 320, so that a range 731, in which the reflected wave needs to be acquired as a basis of speed conversion, is a region above near the rail bottom part.

The speed detection device according to the first embodiment of the present disclosure can provide a distance condition (threshold 732) for a specific distance to determine a sampling condition of data used for the speed conversion, the specific distance being between the speed detection device and the object. Consequently, only a component of the reflected wave with a distance conversion result within a distance range equal to or less than the threshold can be designated as data to be used for the speed conversion.

As a method for setting the sampling condition, the distance condition may include a value that is set in advance in the millimeter wave speed sensor on the assumption that the reflected wave is within a level that can be recognized as a signal, or the value may be set after a signal level of the received reflected wave is measured.

When the sampling condition is desired to be limited to the reflected wave from the rail top part, the sampling condition may be determined to be equivalent to a shortest distance level calculated by the distance calculator.

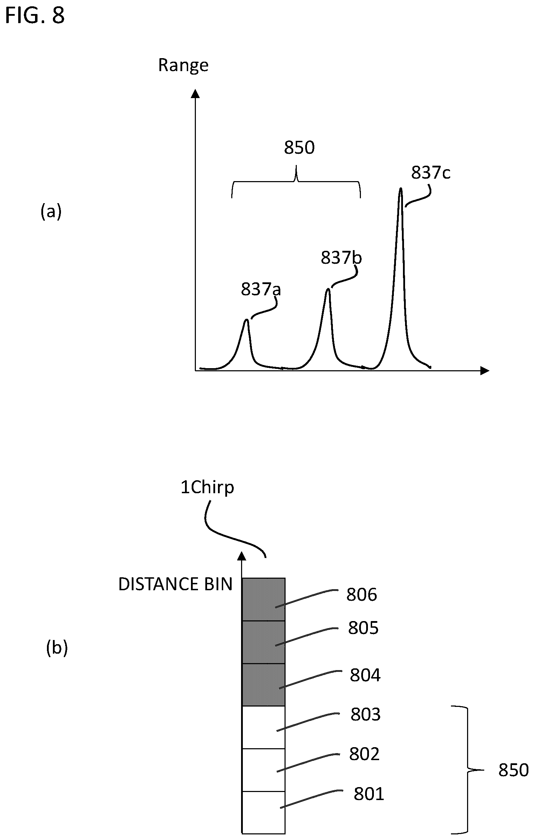

Next, a method for calculating speed will be described with reference to FIG. 8, in which the speed calculator calculates the speed based on a distance calculated by the distance calculator by using only the component of the reflected wave satisfying a predetermined distance condition.

FIG. 8 is a diagram illustrating a speed conversion method according to the first embodiment.

FIG. 8(a) illustrates a result obtained by emitting an irradiation wave for one chirp from the millimeter wave speed sensor 106, receiving reflected waves from the distance h1 to the rail top part 210a, the distance h2 to the rail bottom part 210b, and the distance h3 to the roadbed 320, and performing the distance conversion on the reflected waves in the situation where the rail is installed on the member 322 raising the rail from the roadbed 320 illustrated in FIG. 3.

When the distance conversion is performed from the reflected wave for one chirp, three types of peaks 837a, 837b, and 837c can be obtained as peaks for the distance conversion corresponding to the reflected waves from the distance h1, the distance h2, and the distance h3 illustrated in FIG. 3, respectively.

However, the peak 837c is determined to be generated by a reflected wave from other than the rail, so that a range 850 including the peaks 837a and 837b is set as the distance condition.

Then, the speed conversion is performed on distance conversion data in a range including the peaks 837a and 837b.

FIG. 8(b) is a diagram schematically illustrating the distance BIN from which the peaks of the distance conversion of FIG. 8(a) is calculated, in which results of $FFT_R$ regarding the distances are illustrated as distance BINs 801, 802, 803, 804, 805, and 806 using $FFT_R$ for one chirp. Each of the distance BINs stores complex number data, and includes information on a phase and radio field intensity related to the distance.

Thus, the distance BINs 801 to 806 acquired from one chirp include the distance BINs 801, 802, and 803 that correspond to the distance condition 850 described above and are selected as components satisfying the distance condition 850 in the speed conversion according to the first embodiment of the present disclosure, and speed conversion processing is performed on the components.

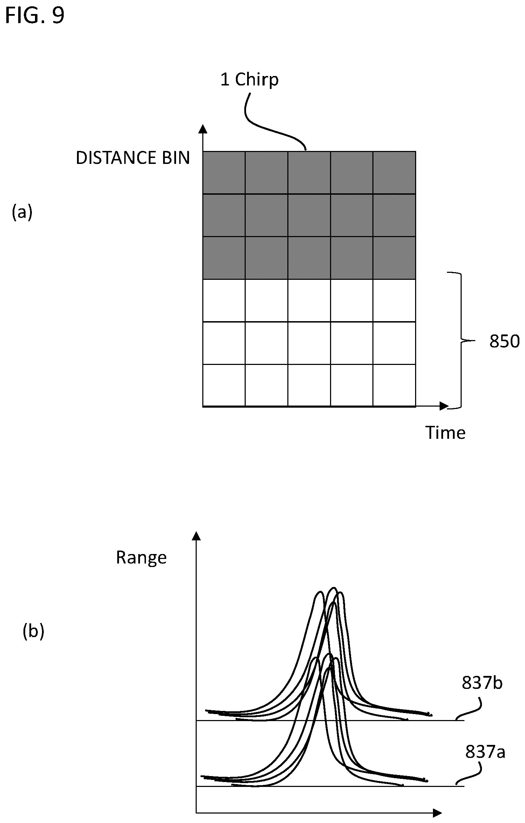

Next, the speed conversion processing will be described with reference to FIG. 9. FIG. 9(a) is a diagram illustrating distance BINs of a plurality of chirps. When the distance conversion is performed on the distance BIN (white BIN in FIG. 9(a)) satisfying the distance condition 850 for each charp as described in FIG. 8, distance information due to a plurality of chirps illustrated in FIG. 9(b) can be obtained.

Then, the speed conversion can be performed by performing $FFT_V$ on beat signals of the plurality of chirps.

After that, the millimeter wave speed sensor performs $FFT_V$ using two or more chirps specifying the sampling range to obtain peak values of Doppler amplitudes at the respective distances 837a and 837b. Then, speed detection can be performed by performing the speed conversion by acquiring a peak value average of sampling data of all chirps.

The number of chirps used for the speed conversion can be appropriately set within a range of an allowable time for the speed conversion per one time.

(Effect of first embodiment)

A millimeter wave speed sensor of a normal FMCW method calculates a beat frequency for each distance to an object using all received reflected waves, and performs the speed conversion using a difference in phase of the beat frequency for each reflected wave.

When the rail is raised as illustrated in FIG. 7, a distance from the millimeter wave speed sensor to the ground is longer than that in normal installation. Thus, a reflected wave having a short distance to the object and a reflected wave to the object are generated in a mixed manner. This installation in FIG. 7 causes the reflected wave having a long distance to the object to have larger attenuation of the irradiation wave and the reflected wave than the reflected wave having a short distance to the object, thereby reducing an S/N ratio that is a ratio of a signal component for performing accurate calculation and noise components other than the signal component. For this reason, when the speed conversion is performed by calculating the beat frequency based on the reflected wave having a long distance to the object, an error is likely to occur.

Then, results of the speed conversion from beat frequency differences for respective reflected waves are inconsistent with each other, so that an average value of the speed conversion to be finally output deviates from a true value of the speed conversion.

In this regard, the first embodiment of the present disclosure enables performing accurate speed detection with less load by limiting a target range of the signal processing as the distance condition.

<Second embodiment>

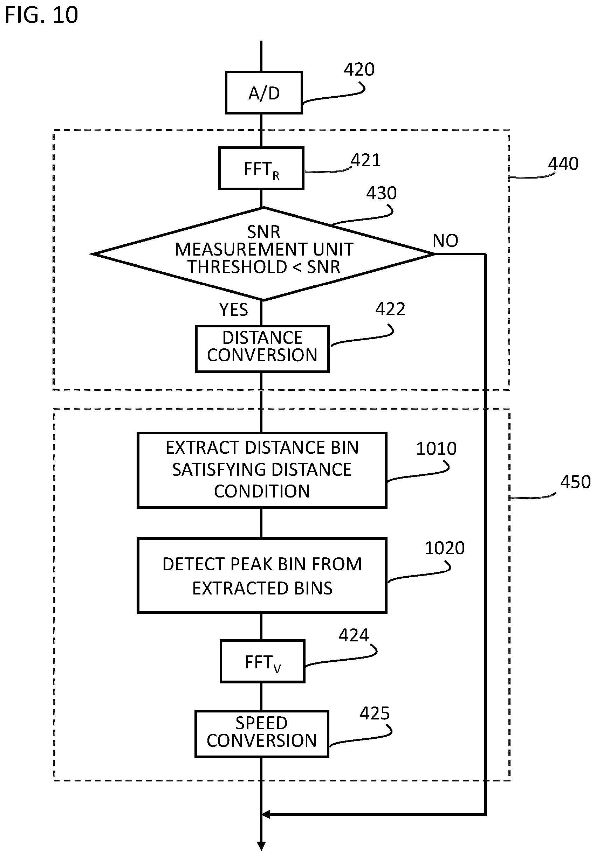

Next, a second embodiment will be described with reference to FIG. 10. The second embodiment is different from the first embodiment in that after distance BINs satisfying a distance condition are extracted, a peak BIN is further detected from the distance BINs, and speed conversion is performed only on the peak BIN.

FIG. 10 is a diagram illustrating a procedure in the sampling selection, the procedure including: extracting the distance BINs satisfying the distance condition; detecting the peak BIN after the extraction; and performing the FFTv processing only on the peak BIN. Then, the same reference numerals are given to the same or equivalent components as those of the first embodiment described above in the following description to simplify or eliminate the description.

When the peak BIN is detected after the extraction of the distance BINs satisfying the distance condition and the speed conversion is performed only on the peak BIN as illustrated in FIG. 10, the load of the $FFT_V$ processing is significantly reduced, and accuracy of the peak BIN is expected to be higher than that of the other distance BINs. Thus, the speed detection can be further improved in accuracy.

<Third embodiment>

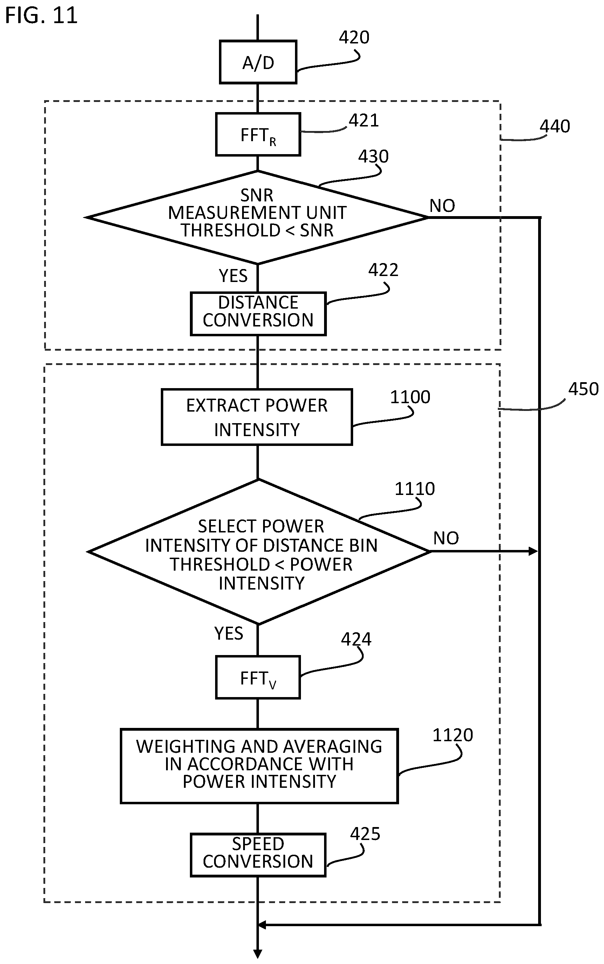

Next, a third embodiment will be described with reference to FIG. 11. The third embodiment is different from the first embodiment in that power intensity extraction 1100 is performed on every BIN after the distance conversion is performed, and the speed conversion is performed on every distance BIN exceeding a predetermined power intensity threshold. The power intensity of the BIN can be easily calculated as an absolute value of a complex number component of each BIN. Then, the same reference numerals are given to the same or equivalent components as those of the first embodiment described above in the following description to simplify or eliminate the description.

The power intensity equal to or higher than a certain level enables predicting signal accuracy to be high, so that the speed conversion can be performed by performing the Doppler FFT on every BIN having strong power intensity, and weighting a result of the Doppler FFT in accordance with the power intensity.

As described above, the embodiments of the present disclosure enable improving accuracy of speed detection in a subsequent step by selecting only a signal with less noise using the SNR measurement unit 430.

The present invention has been described above in detail with reference to the drawings. However, the present invention is not limited to the description, and can be freely changed in a range without changing the gist of the invention.

For example, the functions performed by the distance calculator and the speed calculator described as functional units can be caused to be performed by another functional unit, and function sharing between the distance calculator and the speed calculator also can be changed. The functions of the distance calculator and the speed calculator also can be processed in common in a functional unit of any one of the distance calculator and the speed calculator.

For calculation processing methods at the time of setting the sampling condition and at the time of the speed conversion, a method other than the methods described in the embodiments can be used.

When a plurality of speed sensors is used, speed can be detected by integrating a speed conversion result obtained by each of the sensors.

Reference Signs List

| | |
|---|---|
| 100 | train |
| 101 | rail |
| 102 | train position recognition system |
| 103 | speed detection device |
| 104 | on-board control device |
| 106 | millimeter wave speed sensor |
| 205 | housing |
| 207 | lens |
| 208 | transmission window |
| 209 | wheel |
| 210a | rail top part |

| 210b | rail bottom part |
|------|------------------|
| 415 | synthesizer |
| 416 | antenna |
| 417 | mixer |
| 418 | irradiation wave |
| 419 | reflected wave |
| 420 | A/D conversion processing |
| 421 | $FFT_R$ processing |
| 422 | distance conversion |
| 423 | sampling selection |
| 424 | $FFT_V$ |
| 425 | speed conversion |
| 528 | chirp |

**Claims**

1. A speed detection device that detects speed of a train based on a reflected wave of an electromagnetic wave emitted toward a track on which the train travels,

   the speed detection device comprising:

   a millimeter wave speed sensor having a transmission function of emitting an irradiation wave of the electromagnetic wave and a reception function of receiving a reflected wave of the irradiation wave;
   a distance calculator that calculates a distance from the millimeter wave speed sensor to a reflective object based on a delay time of the reflected wave from the irradiation wave; and
   a speed calculator that calculates speed based on a difference between a beat frequency calculated from a difference between the irradiation wave and the reflected wave, and a beat frequency calculated before the calculated beat frequency,

   wherein the speed calculator determines a sampling condition based on the distance from the millimeter wave speed sensor to the reflective object calculated by the distance calculator, and calculates speed by using only a component of the reflected wave satisfying the sampling condition.

2. The speed detection device according to claim 1, wherein
   the millimeter wave speed sensor includes an SNR determination unit that determines whether a component of the reflected wave is recognized as a signal.

3. The speed detection device according to claim 1 or 2, wherein
   the sampling condition is equivalent to a shortest distance level calculated by the distance calculator.

4. The speed detection device according to claim 1 or 2, wherein
   the sampling condition is a peak BIN extracted from distance BINs satisfying a distance condition after the distance BINs are extracted.

5. The speed detection device according to claim 1 or 2, wherein
   the sampling condition is power intensity exceeding a predetermined level, the power intensity being calculated from a distance BIN.

6. A speed detection method that is performed by a speed detection device including:

   a millimeter wave speed sensor having a transmission function of emitting an irradiation wave of the electromagnetic wave and a reception function of receiving a reflected wave of the irradiation wave;
   a distance calculator that calculates a distance from the millimeter wave speed sensor to a reflective object based on a delay time of the reflected wave from the irradiation wave; and
   a speed calculator that calculates speed based on a difference between a beat frequency calculated from a difference between the irradiation wave and the reflected wave, and a beat frequency calculated before the calculated beat frequency,
   the speed detection method comprising:

a first step of selecting a component of the reflected wave satisfying a sampling condition including a predetermined distance condition based on a distance from the millimeter wave speed sensor to the reflective object calculated by the distance calculator; and

a second step of calculating speed in the speed calculator by using only the component of the reflected wave selected in the first step.

FIG. 1

FIG. 2

EP 4 760 351 A1

FIG. 3

EP 4 760 351 A1

FIG. 4

FIG. 5

FIG. 6

EP 4 760 351 A1

## FIG. 7

(a)

(b)

322

320

Distance

731

Threshold
732

730

Width

FIG. 8

(a)

(b)

FIG. 9

(a)

(b)

FIG. 10

```
           │
        ┌──┴──┐
        │ A/D │ ─────── 420
        └──┬──┘
  ┌────────┼─────────────────────────────────────────┐
  │     ┌──┴──┐                              440
  │     │ FFT_R│ ─────── 421
  │     └──┬──┘
  │        │                430
  │      ╱─┴─╲
  │    ╱       ╲
  │  ╱   SNR     ╲    NO
  │ ⟨ MEASUREMENT UNIT ⟩──────────┐
  │  ╲ THRESHOLD < SNR ╱          │
  │    ╲       ╱                  │
  │      ╲─┬─╱                    │
  │    YES │        422           │
  │   ┌────┴─────┐                │
  │   │ DISTANCE │ ─── 422        │
  │   │CONVERSION│                │
  │   └────┬─────┘                │
  └────────┼──────────────────────┼──┘
  ┌────────┼──────────────────────┼──┐
  │        │                      │
  │  ┌─────┴──────────┐           │   450
  │  │ EXTRACT DISTANCE BIN│      │
  │  │ SATISFYING DISTANCE │ ─ 1010
  │  │   CONDITION         │      │
  │  └─────┬──────────┘           │
  │        │                      │
  │  ┌─────┴──────────┐           │
  │  │DETECT PEAK BIN FROM│ ─ 1020
  │  │  EXTRACTED BINS    │       │
  │  └─────┬──────────┘           │
  │        │      424             │
  │     ┌──┴──┐                   │
  │     │ FFT_V│ ─── 424          │
  │     └──┬──┘                   │
  │        │       425            │
  │   ┌────┴─────┐                │
  │   │  SPEED   │ ─── 425        │
  │   │CONVERSION│                │
  │   └────┬─────┘                │
  └────────┼──────────────────────┼──┘
           │                      │
           ◄──────────────────────┘
           │
           ▼
```

FIG. 11

A/D — 420

FFT$_R$ — 421

SNR MEASUREMENT UNIT THRESHOLD < SNR — 430

440

NO

YES

DISTANCE CONVERSION — 422

450

EXTRACT POWER INTENSITY — 1100

SELECT POWER INTENSITY OF DISTANCE BIN THRESHOLD < POWER INTENSITY — 1110

NO

YES

FFT$_V$ — 424

WEIGHTING AND AVERAGING IN ACCORDANCE WITH POWER INTENSITY — 1120

SPEED CONVERSION — 425

# EP 4 760 351 A1

## INTERNATIONAL SEARCH REPORT

| | International application No. |
|---|---|
| | **PCT/JP2024/016434** |

**A. CLASSIFICATION OF SUBJECT MATTER**

*G01S 13/60*(2006.01)i

FI: G01S13/60 200

According to International Patent Classification (IPC) or to both national classification and IPC

**B. FIELDS SEARCHED**

Minimum documentation searched (classification system followed by classification symbols)

G01S7/00-7/42; G01S13/00-13/95;

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-112794 A (MITSUBISHI ELECTRIC CORPORATION) 14 June 2012 (2012-06-14) entire text, all drawings | 1-6 |
| A | JP 08-054461 A (HIGASHI NIPPON RYOKAKU TETSUDO) 27 February 1996 (1996-02-27) entire text, all drawings | 1-6 |
| A | JP 2017-015474 A (HITACHI, LTD.) 19 January 2017 (2017-01-19) entire text, all drawings | 1-6 |
| A | US 2021/0173071 A1 (THALES CANADA INC.) 10 June 2021 (2021-06-10) entire text, all drawings | 1-6 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

23

**INTERNATIONAL SEARCH REPORT**
Information on patent family members

International application No.

**PCT/JP2024/016434**

| Patent document cited in search report | | | Publication date (day/month/year) | Patent family member(s) | | | Publication date (day/month/year) |
|---|---|---|---|---|---|---|---|
| JP | 2012-112794 | A | 14 June 2012 | US | 2012/0136621 | A1 | |
| JP | 08-054461 | A | 27 February 1996 | (Family: none) | | | |
| JP | 2017-015474 | A | 19 January 2017 | (Family: none) | | | |
| US | 2021/0173071 | A1 | 10 June 2021 | EP | 4073546 | A4 | |

Form PCT/ISA/210 (patent family annex) (July 2022)

**REFERENCES CITED IN THE DESCRIPTION**

**Patent documents cited in the description**

- JP 2021018205 A

- WO 2022075075 A